# FASCICULE DE BREVET EUROPEEN

(11) **EP 2 469 266 B1**
(45) Date de publication et mention de la délivrance du brevet: **01.05.2013**
(21) Numéro de dépôt: 11195244.6
(22) Date de dépôt: 22.12.2011
(51) Int. Cl.: G01N 17/02, G01N 3/56

(54) **Appareil de recherche des effets de surface sur une éprouvette**
Gerät zur Untersuchung von Oberflächenwirkungen auf eine Probe
Apparatus for searching for skin effects on a test coupon

(30) Priorité: 24.12.2010 FR 1061248
(43) Date de publication de la demande: 27.06.2012
(73) Titulaire: COMMISSARIAT A L'ENERGIE ATOMIQUE ET AUX ENERGIES ALTERNATIVES, 75015 Paris (FR)
(72) Inventeur: Herms, Emmanuel, 78210 Saint Cyr L'École (FR); Dufour, Christophe, 92260 Fontenay Aux Roses (FR)
(74) Mandataire: Dennemeyer & Associates S.A.

(56) Documents cités:
- CN-A- 101 598 660
- CN-Y- 2 720 431
- CN-Y- 201 429 562

## Description

### DOMAINE TECHNIQUE.

L'invention est du domaine de la recherche des propriétés des matériaux solides par application d'une contrainte mécanique, associée à une recherche de la résistance des matériaux à la corrosion par mesure électrochimique. Elle a pour objet un appareil pour rechercher les effets de surface sur une éprouvette soumise au frottement en milieu aqueux sous pression.

### ETAT DE LA TECHNIQUE.

Les pièces mécaniques soumises à des conditions hostiles subissent des altérations qui affectent leurs propriétés mécaniques, physiques et/ou physicochimiques, telles que leur état de surface et/ou leur résistance à des efforts ou contraintes auxquels elles sont soumises, souvent de manière répétée. Les systèmes mécaniques intégrant des pièces mécaniques soumises à des conditions hostiles, doivent être régulièrement vérifiés pour éviter un dysfonctionnement et/ou sont soumis à des opérations de maintenance sur des périodes prédéfinies. De telles opérations de vérification et/ou de maintenance permettent de remplacer les pièces mécaniques susceptibles d'être endommagées, avant d'être source d'un dysfonctionnement ou d'une panne du système mécanique. Pour permettre de définir la fréquence adaptée de vérification et/ou de maintenance des systèmes mécaniques, il est nécessaire de connaître les facultés de résistance des pièces mécaniques qu'ils comportent au regard des conditions hostiles auxquelles elles sont destinées à être soumises. La résistance des pièces mécaniques est notamment dépendante du ou des matériaux à partir desquels elles sont formées, et il est courant de tester les matériaux à partir d'éprouvettes placées dans des conditions hostiles prédéterminées pour étudier leur comportement.

Dans le domaine de l'industrie nucléaire, les centrales électronucléaires à réacteur d'eau pressurisée mettent en oeuvre un circuit primaire de circulation d'eau, qui est associé à un ou plusieurs générateurs de vapeur comportant de multiples tubes. La vapeur d'eau produite est exploitée pour mouvoir des turbines générant de l'électricité. Le circuit primaire et le générateur de vapeur sont placés à l'intérieur d'une enceinte de confinement, qui est traversée par des tuyauteries métalliques d'alimentation en eau et d'évacuation de la vapeur produite par le générateur de vapeur. Un transfert d'eau du circuit primaire vers l'extérieur de l'enceinte est évité sous la condition que l'intégrité et l'étanchéité des tubes que comporte le générateur de vapeur soient préservées. L'usure des tubes est notamment induite par leur exploitation en milieu aqueux qui présente des caractéristiques physicochimiques particulières au regard de son acidité, de sa température et de sa teneur en éléments dissous par exemple. Le milieu aqueux dans lequel sont placés les tubes influe sur la valeur du potentiel électrochimique des matériaux métalliques, avec pour conséquence de dégrader l'état de surface des tubes et plus particulièrement la couche passive du matériau qui les constituent. La capacité de la couche passive à se reformer après avoir été endommagée est déterminante sur la tenue d'un matériau exposé à des phénomènes d'usure. Il apparait donc nécessaire d'évaluer la tenue du matériau à partir duquel sont formés les tubes des générateurs de vapeurs exploités par les centrales électronucléaires à réacteur d'eau pressurisée.

Dans le domaine des installations de captage de produits pétroliers, il est connu d'évaluer la résistance à l'usure de tubes exploités pour collecter ces produits à partir d'un puits. Il a été proposé par le document CN2720431-Y (OIL PRODUCT TECH. INST), un appareil pour tester la résistance d'un tel tube soumis à des efforts de frottement en milieu aqueux sous pression. Une éprouvette conformée en tube est placée dans une enceinte étanche à l'intérieur de laquelle circule un fluide corrosif, en étant maintenue par des brides annulaires qui exercent une pression périphérique sur le tube. L'éprouvette est animée d'un mouvement qui induit son frottement à l'intérieur des brides pour évaluer son comportement.

### EXPOSE DE L'INVENTION.

Le but de la présente invention est de proposer un appareil de recherche des effets de surface sur une éprouvette soumise au frottement en milieu aqueux sous pression, notamment pour tester un matériau utilisé pour des composants exploités par une centrale électronucléaire à réacteur d'eau pressurisée, tels que des tubes que comprend un générateur de vapeur équipant cette centrale. Il est plus particulièrement visé par la présente invention de proposer un tel appareil, dont la structure soit simple et aisée à mettre en oeuvre pour divers critères de recherche susceptibles de varier entre deux essais de recherche, et qui procure des résultats fiables, précis et facilement exploitables des effets induits sur la couche passive du matériau à partir duquel est formée l'éprouvette.

L'appareil de la présente invention est un appareil de recherche des effets de surface sur une éprouvette soumise au frottement en milieu aqueux sous pression. Cet appareil comprend un bâti qui est équipé :
*) de moyens de maintien de l'éprouvette à l'intérieur d'une enceinte étanche remplie d'un fluide sous pression porté à température. Le fluide est notamment introduit à l'intérieur de l'enceinte après installation de l'éprouvette. L'appareil est notamment équipé de moyens de chauffage du fluide et de moyens de mise en circulation du fluide sous pression à l'intérieur de l'enceinte, par l'intermédiaire d'un circuit hydraulique approprié mettant par exemple en oeuvre une pompe ou organe analogue de mise en circulation du fluide à l'intérieur de l'enceinte.
*) de moyens d'application d'efforts de frottement entre l'éprouvette et un organe de mise sous contrainte placés à l'intérieur de l'enceinte, comprenant des premiers moyens motorisés de mise en mouvement relatif entre l'organe de mise sous contrainte et l'éprouvette, et des deuxièmes moyens d'application de l'organe de mise sous contrainte en appui contre l'éprouvette selon un effort déterminé,
*) de moyens de mesure électrochimique comprenant notamment un capteur, tel qu'une électrode ou organe analogue, de détection de la variation du potentiel électrochimique de l'éprouvette soumise au frottement.

Selon la présente invention, un tel appareil est principalement reconnaissable en ce que l'organe de mise sous contrainte est agencé en pion rotatif qui est entraîné en rotation par les premiers moyens. L'éprouvette est portée par les deuxièmes moyens, qui sont mobiles en translation entre une position de chargement de l'éprouvette, dans laquelle l'éprouvette est placée à distance du pion rotatif, et une position d'application, dans laquelle l'éprouvette est maintenue en appui contre le pion rotatif.

Le pion rotatif est un élément de préférence à surface de révolution, tel que de conformation cylindrique, tronconique ou analogue, dont la face dédiée à son application contre l'éprouvette est plane en étant notamment formée par une face de bout du dit élément de révolution qui est orientée orthogonalement à son axe de rotation. L'état de surface du pion rotatif est avantageusement adapté selon les effets recherchés sur l'éprouvette, notamment au regard de sa rugosité et de sa faculté à induire une usure de l'éprouvette ou son polissage par exemple. L'éprouvette est agencée en plaquette ou élément de conformation analogue comportant une face plane dédiée à la réception du pion rotatif. L'éprouvette est notamment formée d'une plaquette de conformation parallélépipédique, plus particulièrement à grandes faces carrées dont les dimensions sont de l'ordre d'un ou de plusieurs centimètres pour une épaisseur significativement moindre.

On comprendra que le port de l'éprouvette par les deuxièmes moyens implique que l'éprouvette est conjointement mobile avec les deuxièmes moyens entre les positions de chargement et d'application. Le déplacement de l'éprouvette vers le pion rotatif est obtenu avec précision, avec pour avantage de permettre d'affiner l'effort de mise en application de l'éprouvette contre le pion rotatif, qui est souhaité faible et plus particulièrement de l'ordre inférieur à 100 Newtons.

L'agencement entre eux des premiers et deuxièmes moyens, et les modalités de rapprochement de l'éprouvette vers le pion rotatif en vue de leur mise en application l'une contre l'autre, sont aisés à mettre en oeuvre. Les chargements et déchargements respectivement de l'éprouvette sur les deuxièmes moyens et du pion rotatif sur les premiers moyens, peuvent être rapidement et facilement opérés. L'appareil peut être utilisé rapidement de l'un à l'autre de plusieurs essais de recherche successifs mettant respectivement en oeuvre des éprouvettes et des pions de structures diverses. Les réglages de la vitesse de rotation du pion rotatif et de la force d'application de l'éprouvette contre le pion rotatif peuvent être précis en étant simples à mettre en oeuvre, à partir des seuls paramètres d'ajustement de la vitesse de rotation du pion rotatif et du déplacement en translation de l'éprouvette par l'intermédiaire des deuxièmes moyens. L'essai peut être réalisé en milieu aqueux à partir d'une structure simple et peu coûteuse de l'appareil, tant au regard des coûts pour son obtention que ceux relatifs à sa maintenance, avec des mesures obtenues fiables et précises.

Selon une forme préférée de réalisation, les premiers moyens comprennent un organe moteur qui est disposé à l'extérieur de l'enceinte et qui est doté d'un arbre d'entraînement du pion rotatif. Cet arbre d'entraînement, en prise sur l'arbre de sortie de l'organe moteur, se prolonge depuis l'extérieur vers l'intérieur de l'enceinte en traversant la paroi correspondante de l'enceinte qui comporte un passage à cet effet. La vitesse de rotation de l'organe moteur peut être ajustée avec précision. Le pion rotatif est susceptible d'être entraîné directement par l'arbre d'entraînement malgré l'emplacement du pion rotatif en milieu aqueux, en évitant l'utilisation de moyens de transmission intermédiaires susceptibles d'accroître les coûts d'obtention et de maintenance de l'appareil. Les modalités de montage du pion rotatif sur l'arbre d'entraînement sont susceptibles d'être structurellement simples en permettant une installation et un retrait rapides et aisés du pion rotatif entre deux essais de recherche.

Des moyens d'étanchéité sont interposés entre l'arbre d'entraînement et une paroi correspondante de l'enceinte qu'il traverse, les dits moyens d'étanchéité comprenant de préférence un tube à double enveloppe de passage intérieur de l'arbre d'entraînement. Des organes de roulement peuvent être avantageusement interposés entre les deux enveloppes, pour éviter une usure rapide des surfaces en regard de l'arbre d'entraînement et de la traversée de paroi correspondante de l'enceinte, sans pour autant accroître outre mesure les coûts structurels de l'appareil et avec pour avantage de réduire les coûts de maintenance. De préférence, un joint spécifique est interposé entre l'arbre d'entraînement et l'arbre de sortie de l'organe moteur.

Selon une forme avantageuse de réalisation, le pion rotatif est monté amovible sur les premiers moyens par l'intermédiaire d'un porte-outil solidaire de l'arbre d'entraînement. Le pion rotatif est fixé sur le porte-outil par l'intermédiaire de moyens de fixation facilement réversible, tels que par vissage, par emboîtement ou par l'intermédiaire d'organes de fixation coopérants. Le pion rotatif est interchangeable parmi une pluralité de pions d'un jeu qui sont formés à partir d'un matériau respectif spécifique. Le matériau à partir duquel est formé le pion rotatif est susceptible d'être un matériau métallique, tel que de l'acier inoxydable, ou d'être un matériau composite et/ou synthétique, tel qu'une céramique éventuellement chargée.

Selon une forme préférée de réalisation, les deuxièmes moyens comprennent un châssis qui est muni des moyens de maintien immobile de l'éprouvette et qui est monté sur le bâti par l'intermédiaire de moyens de manoeuvre en translation entre les positions de chargement et d'application. Le châssis est notamment agencé en au moins un tirant, colonne ou organe analogue, qui s'étend depuis l'extérieur de l'enceinte, dans une zone du châssis réservée à sa mise en relation avec les moyens de manoeuvre, vers l'intérieur de l'enceinte dans une zone de réception des moyens de maintien de l'éprouvette. L'installation et le retrait de l'éprouvette sont aisés à opérer à partir d'un accès à la zone correspondante du châssis qui est aisé à réaliser, tel qu'au moyen d'une trappe équipant l'enceinte. Des organes d'étanchéité sont interposés entre le châssis et la paroi correspondante de l'enceinte traversée par le châssis. De tels organes d'étanchéité sont avantageusement agencés en joint torique muni de lèvres de glissement ou organes analogues. Les deuxièmes moyens sont de structures simples et sont aisés à mettre en oeuvre. L'étanchéité entre le châssis la paroi correspondante de l'enceinte peut être aisément obtenue à moindres coûts, tel qu'à partir d'un ou de plusieurs dits organes d'étanchéité agencés en joints toriques à lèvres.

Les moyens de maintien immobile de l'éprouvette sont plus particulièrement formés par un logement de réception par encastrement de l'éprouvette, qui est ménagé dans un socle monté sur les deuxièmes moyens, et plus particulièrement sur le châssis. De tels moyens d'encastrement procurent une immobilisation fiable de l'éprouvette à moindres coûts. Des reliefs agrippant sont susceptibles d'être ménagés entre le logement et l'éprouvette, pour favoriser un maintien stable de l'éprouvette en position souhaitée du logement en limitant les surfaces de contact entre l'éprouvette et le socle.

Le châssis est préférentiellement équipé de moyens de refroidissement. De tels moyens de refroidissement sont de préférence du type comprenant une chambre de refroidissement du châssis par circulation de fluide. Le refroidissement du châssis, à une température souhaitée inférieure à 80°C, permet de préserver des organes d'étanchéité peu coûteux en élastomère interposés entre l'enceinte et le châssis.

Selon une forme de réalisation, les moyens de manoeuvre en translation du châssis sont équipés de moyens de tarage de l'effort d'application de l'éprouvette contre le pion rotatif. De tels moyens de tarage comprennent par exemple un capteur d'effort, qui est susceptible d'être exploité en relation avec des moyens de commande d'une mise en oeuvre motorisée des moyens de manoeuvre en translation du châssis. Le capteur d'effort est aussi susceptible d'être en relation avec des moyens de transcription d'informations visibles par un opérateur, moyens d'affichage et/ou d'impression et/ou de mise en mémoire notamment, dans le cas d'une manoeuvre à commande manuelle du châssis notamment. De tels moyens de mise en mémoire peuvent être mis à profit pour stocker l'ensemble des informations utiles relatives à chacun des essais de recherche effectués, tels que les efforts d'application de l'éprouvette contre le pion rotatif, la vitesse d'entraînement du pion rotatif, la température et la pression du fluide à l'intérieur de l'enceinte, qui sont mises en correspondance avec l'évolution des mesures électrochimiques effectuées au cours des essais.

Dans le cas préféré de moyens de manoeuvre du châssis motorisé, une commande relative à un effort d'application prédéterminé de l'éprouvette contre le pion rotatif peut être facilement mise en oeuvre. Le capteur d'effort est susceptible d'être exploité pour générer une commande de maintien d'un effort de consigne d'application de l'éprouvette contre le pion rotatif en cours d'essai.

Les moyens de manoeuvre en translation du châssis sont avantageusement du type à vis sans fin, préférentiellement motorisée. De tels moyens de manoeuvre procurent une fiabilité du maintien d'un effort de consigne d'application de l'éprouvette contre le pion rotatif en cours d'essai, et un réglage précis de cet effort souhaité relever de plages de faibles de l'ordre inférieures à 100 N.

Le pion rotatif et l'éprouvette sont de préférence respectivement en prise sur les premiers moyens et sur les deuxièmes moyens par l'intermédiaire de moyens électriquement isolant. Plus particulièrement le porte-outil et/ou le socle sont formés à partir d'un matériau électriquement isolant, tel qu'un alliage oxydé à base de zirconium. L'isolation électrique entre le pion rotatif et les premiers moyens, et entre l'éprouvette et les deuxièmes moyens, permet d'obtenir des mesures électrochimiques fiables du potentiel de l'éprouvette et de sa variation dans le temps, à partir du couplage galvanique induit entre l'éprouvette et le pion rotatif en frottement l'un contre l'autre en milieu aqueux.

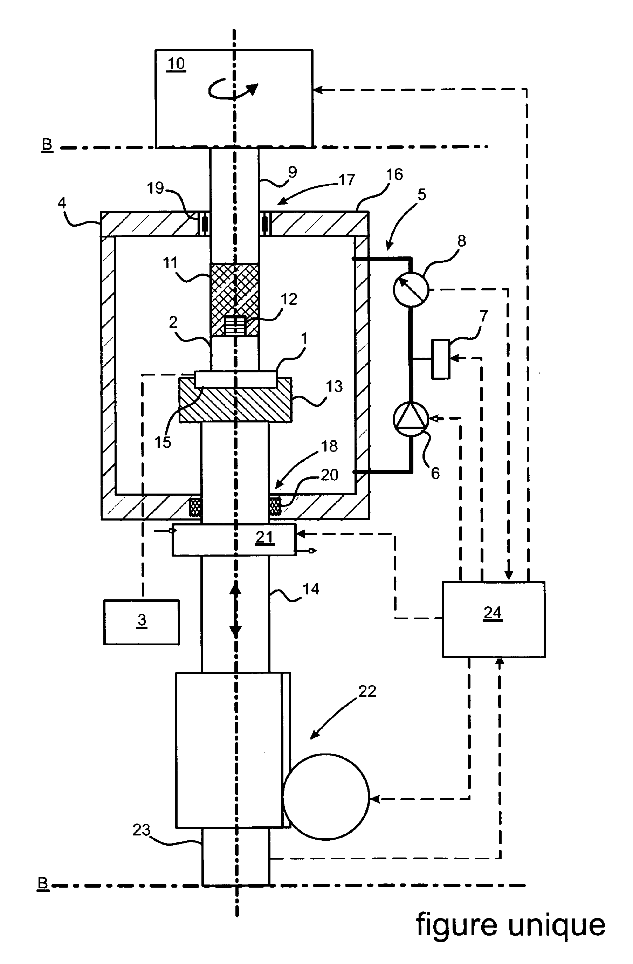

### DESCRIPTION DE LA FIGURE UNIQUE.

Un exemple de réalisation de la présente invention va être décrit en relation avec la figure unique de la planche annexée, qui illustre schématiquement un appareil selon une forme préférée de réalisation de l'invention.

Sur la figure, un appareil est agencé pour réaliser des essais de recherche relatifs aux effets induits sur la couche passive d'un matériau placé en milieu aqueux porté à température et soumis à des frottements. Le matériau est notamment un matériau métallique recherché exploitable pour la formation de composants d'installations nucléaires, et plus particulièrement de tubes que comprend un générateur de vapeur équipant une centrale électronucléaire à réacteur d'eau pressurisée. L'appareil est susceptible d'être utilisé pour effectuer des recherches sur des matériaux destinés à la formation d'autres types de composants, y compris pour des composants de système mécaniques relevant d'un autre domaine que les installations nucléaires. La recherche est effectuée au moyen d'une éprouvette 1 de préférence de conformation parallélépipédique. Cette éprouvette 1 est placée dans un milieu aqueux à une température définie, et est soumise à des frottements à l'une de ses grandes faces au moyen d'un pion rotatif 2. Des moyens de mesure électrochimique 3 permettent d'évaluer le potentiel électrochimique de l'éprouvette 1 et la variation de ce potentiel au cours des essais réalisés.

L'appareil comporte un bâti B qui supporte une enceinte 4 étanche apte à être remplie d'un fluide sous pression porté à température. L'enceinte 4 est équipée d'un circuit d'alimentation en fluide 5, comprenant notamment une pompe 6, des moyens de chauffage 7 du fluide et des moyens de mesure 8 de la pression du fluide et de sa température. L'éprouvette 1 est prévue pour être maintenue immobile à l'intérieur de l'enceinte 4, en étant appliquée contre le pion rotatif 2 entraîné en rotation par un arbre d'entraînement 9 en prise sur un organe moteur 10. L'arbre d'entraînement 9 s'étend depuis l'extérieur de l'enceinte 4 dans une zone de prise sur l'arbre de sortie de l'organe moteur 10, vers l'intérieur de l'enceinte 4 dans une zone de montage coaxial du pion rotatif 2. Les essais sont effectués à une température du fluide de l'ordre de 350°C avec une force d'application de l'éprouvette 1 contre le pion rotatif 2 de l'ordre de quelques Newtons, préférentiellement inférieure à 100 N. Il est recherché une organisation de l'appareil qui permette d'effectuer de manière fiable les essais avec une faible contrainte d'application de l'éprouvette 1 contre le pion rotatif 2, compte tenu de l'étroite relation entre la corrosion subie par le matériau et l'usure mécanique de ce matériau dans une gamme de faibles contraintes d'application de l'éprouvette 1 contre le pion rotatif 2.

Plus particulièrement, le pion rotatif 2 est en prise sur l'arbre d'entraînement 9 par l'intermédiaire d'un porte-outil 11 électriquement isolant. Le pion rotatif 2 est monté sur le porte outil 11 par des moyens de fixation facilement réversible 12, tels que par vissage, pour être amovible et interchangeable parmi des pions d'un jeu qui sont formés à partir de matériaux spécifiques. L'éprouvette 1 est maintenue en position à l'intérieur de l'enceinte 4 par l'intermédiaire d'un socle 13 électriquement isolant. Ce socle 13 est porté par un châssis 14 agencé en tirant, et comporte un logement 15 de réception de l'éprouvette 1. Ce logement 15 est de forme complémentaire à celle de l'éprouvette 1 qu'il reçoit par encastrement, la conformation parallélépipédique de l'éprouvette 1 étant mise à profit pour son immobilisation ferme en rotation sur le socle 13.

L'enceinte 4 comporte une trappe 16 pour permettre le retrait et l'installation du pion rotatif 2 et de l'éprouvette 1 à l'intérieur de l'enceinte. Sur l'exemple de réalisation illustré, cette trappe 16 est formée d'une paroi de l'enceinte 4 qui est montée amovible. La trappe 16 est agencée en couvercle de l'enceinte 4, de sorte que l'éprouvette 1 puisse être aisément introduite à l'intérieur de l'enceinte 4 et être placée sur le socle 13, après retrait de l'arbre d'entraînement 9. Le retrait de l'arbre d'entraînement est facilement opéré à partir d'un mouvement monodirectionnel axial, et le pion rotatif 2 dont il est porteur peut être facilement remplacé par un autre pion rotatif 2, notamment en cas d'usure ou pour utiliser un pion rotatif 2 issu d'un autre matériau.

Des passages 17 et 18 sont ménagés pour respectivement l'arbre d'entraînement 9 et le châssis 14 à travers les parois de l'enceinte 4. Ces passages 17,18 sont équipés de moyens d'étanchéités 19,20 pour interdire toute fuite du fluide hors de l'enceinte 4 au cours des essais. Les moyens d'étanchéités 19 entre l'arbre d'entraînement 9 et l'enceinte 4 sont agencés en cage à double enveloppe munie d'organes de roulement interposés entre les enveloppes. Les moyens d'étanchéité 20 entre le châssis 14 et l'enceinte 4 sont du type à joint torique en élastomère, préférentiellement muni de lèvres de frottement axial contre le châssis 14. Pour permettre l'usage adapté de joints en élastomère interposés entre le châssis 14 et l'enceinte 4, des moyens de refroidissement 21 permettent de maintenir le châssis 14 à une température de l'ordre inférieure à 80°C, au moins dans sa zone de traversée de la paroi correspondante de l'enceinte 4. Ces moyens de refroidissement 21 sont de préférence du type mettant en oeuvre une chambre de circulation d'un fluide de refroidissement.

Le châssis 14 est agencé en tirant équipé de moyens de manoeuvre en translation 22, entre une position de chargement de l'éprouvette 1 et une position d'application de l'éprouvette 1 contre le pion rotatif 2. Les moyens de manoeuvre en translation 22 du châssis 14 sont du type à vis sans fin, pour permettre un réglage précis et fiable de la force d'application de l'éprouvette 1 contre le pion rotatif 2. Le châssis 14 est équipé de moyens de tarage 23,24 de la force d'application de l'éprouvette 1 contre le pion rotatif 2. Ces moyens de tarage 23,24 comprennent un capteur d'effort axial supporté par le châssis 14, qui permet d'évaluer avec précision, voire de corriger en continu en cours d'essai, la contrainte axiale subie par le châssis 14 sous l'effet de l'application de l'éprouvette 1 contre le pion rotatif 2 et en conséquence la force d'application de l'éprouvette 1 contre le pion rotatif 2.

Des moyens de commande 24 permettent de réguler la circulation et la température du fluide à l'intérieur de l'enceinte 4, la mise en oeuvre de la pompe 6 et des moyens de chauffage 7, les moyens de commande 24 étant placés sous la dépendance des moyens de mesure 8 de la pression du fluide et de sa température. Les moyens de commande 24 sont aussi exploités pour réguler la vitesse de rotation de l'organe moteur 10 d'entraînement du pion rotatif 2, et le déplacement en translation du châssis 14 en étant placé sous la dépendance du capteur d'effort 23 avec lequel ils sont associés pour composer les moyens de tarage 23,24. Les moyens de commande 24 sont aussi avantageusement exploités pour réguler la circulation du fluide de refroidissement du châssis 14.

## Revendications

1. Appareil de recherche des effets de surface sur une éprouvette (1) soumise au frottement en milieu aqueux sous pression, cet appareil comprenant un bâti (B) qui est équipé :
*) de moyens de maintien de l'éprouvette (1) à l'intérieur d'une enceinte (4) étanche remplie d'un fluide sous pression porté à température.
*) de moyens d'application d'efforts de frottement entre l'éprouvette (1) et un organe de mise sous contrainte placés à l'intérieur de l'enceinte (4), comprenant des premiers moyens motorisés (10) de mise en mouvement relatif entre l'organe de mise sous contrainte et l'éprouvette (1), et des deuxièmes moyens (14) d'application de l'organe de mise sous contrainte en appui contre l'éprouvette (1) selon un effort déterminé,
*) de moyens de mesure électrochimique (3) comprenant un capteur de détection de la variation du potentiel électrochimique de l'éprouvette (1) soumise au frottement,
**caractérisé en ce que** l'organe de mise sous contrainte est agencé en pion rotatif (2) qui est entraîné en rotation par les premiers moyens (10), et **en ce que** l'éprouvette (1) est portée par les deuxièmes moyens (14) qui sont mobiles en translation entre une position de chargement de l'éprouvette (1), dans laquelle l'éprouvette (1) est placée à distance du pion rotatif (2), et une position d'application, dans laquelle l'éprouvette (1) est maintenue en appui contre le pion rotatif (2).

2. Appareil selon la revendication 1, **caractérisé en ce que** les premiers moyens comprennent un organe moteur (10) qui est disposé à l'extérieur de l'enceinte et qui est doté d'un arbre d'entraînement (9) du pion rotatif (2) se prolongeant vers l'intérieur de l'enceinte (4).

3. Appareil selon la revendication 2, **caractérisé en ce que** des moyens d'étanchéité (19) sont interposés entre l'arbre d'entraînement (9) et une paroi correspondante de l'enceinte (4) qu'il traverse, les dits moyens d'étanchéité (19) comprenant un tube à double enveloppe de passage intérieur de l'arbre d'entraînement (9).

4. Appareil selon l'une quelconque des revendications 2 et 3, **caractérisé en ce que** le pion rotatif (2) est monté amovible sur les premiers moyens (10) par l'intermédiaire d'un porte-outil (11) solidaire de l'arbre d'entraînement (9), le pion rotatif (2) étant fixé sur le porte-outil (11) par l'intermédiaire de moyens de fixation facilement réversibles (12) et étant interchangeable parmi une pluralité de pions d'un jeu qui sont formés à partir d'un matériau respectif spécifique.

5. Appareil selon l'une quelconque des revendications précédentes, **caractérisé en ce que** les deuxièmes moyens comprennent un châssis (14) qui est muni des moyens de maintien immobile de l'éprouvette (1) et qui est monté sur le bâti (B) par l'intermédiaire de moyens de manoeuvre en translation (22) entre les positions de chargement et d'application.

6. Appareil selon la revendication 5, **caractérisé en ce que** les moyens de maintien immobile de l'éprouvette (1) sont formés par un logement (15) de réception par encastrement de l'éprouvette (1), qui est ménagé dans un socle (13) monté sur les deuxièmes moyens (14).

7. Appareil selon l'une quelconque des revendications 5 et 6, **caractérisé en ce que** le châssis (14) est équipé de moyens de refroidissement (21).

8. Appareil selon l'une quelconque des revendications 5 à 7, **caractérisé en ce que** les moyens de manoeuvre en translation (22) du châssis (14) sont équipés de moyens de tarage (23,24) de l'effort d'application de l'éprouvette (1) contre le pion rotatif (2).

9. Appareil selon l'une quelconque des revendications 5 à 8, **caractérisé en ce que** les moyens de manoeuvre en translation (22) du châssis (14) sont du type à vis sans fin.

10. Appareil selon l'une quelconque des revendications précédentes, **caractérisé en ce que** le pion rotatif (2) et l'éprouvette (1) sont respectivement en prise sur les premiers moyens (10) et sur les deuxièmes moyens (14) par l'intermédiaire de moyens électriquement isolant.

## Claims

1. A device for seeking surface effects on a test specimen (1) subject to friction in a pressurized aqueous medium, this device comprising a frame (B), which is equipped:
*) with means for maintaining the test specimen (1) inside a sealed enclosure (4) filled with a pressurized fluid brought to a temperature,
*) means for applying frictional forces between the test specimen (1) and a stressing member placed inside the enclosure (4), comprising first motor-driven means (10) for relative motion between the stressing number and the test specimen (1), and second means (14) for applying the stressing member bearing against the test specimen (1) according to a determined force,
*) means for electrochemical measurement (3) comprising a sensor for detecting the variation of the electrochemical potential of the test specimen (1) subject to friction,
**characterized in that** the stressing member is laid out as a rotary pin (2), which is driven into rotation by the first means (10), and **in that** the test specimen (1) is borne by second means (14) which are translationally movable between a position for loading the test specimen (1), in which the test specimen (1) is placed at a distance from the rotary pin (2), and an application position, in which the test specimen (1) is held bearing against the rotary pin (2).

2. The device according to claim 1, **characterized in that** the first means comprise a driving member (10) which is positioned outside the enclosure and which is provided with a shaft (9) for driving the rotary pin (2) extending towards the inside of the enclosure (4),

3. The device according to claim 2, **characterized in that** sealing means (19) are interposed between the driving shaft (9) and a corresponding wall of the enclosure (4) which it crosses, said sealing means (19) comprising a dual-casing tube for the inner passage of the driving shaft (9).

4. The device according to any of claims 2 and 3, **characterized in that** the rotary pin (2) is removably mounted on the first means (10) via a tool holder (11) secured to the driving shaft (9), the rotary pin (2) being attached on the tool holder (11) via easily reversible attachment means (12) and being interchangeable from among a plurality of pins of a set which are formed from a respective specific material.

5. The device according to any of the preceding claims, **characterized in that** the second means comprise a chassis (14) which is provided with means for maintaining the test specimen (1) fixed, and which is mounted on the frame (B) via translational maneuvering means (22) between the loading and application positions.

6. The device according to claim 5, **characterized in that** the means for maintaining the test specimen (1) fixed are formed by a housing (15) for receiving the test specimen (1) by recessed fitting, which is made in a base (13) mounted on the second means (14).

7. The device according to any of claims 5 and 6, **characterized in that** the chassis (14) is equipped with cooling means (21).

8. The device according to any of claims 5 to 7, **characterized in that** the translational maneuvering means (22) of the chassis (14) are equipped with means (23, 24) for taring the application force of the test specimen (1) against the rotary pin (2).

9. The device according to any of claims 5 to 8, **characterized in that** the translational maneuvering means (22) of the chassis (14) are of the worm screw type.

10. The device according to any of the preceding claims, **characterized in that** the rotary pin (2) and the test specimen (1) are respectively engaged with the first means (10) and with the second means (14) via electrically insulating means.

## Patentansprüche

1. Gerät zur Untersuchung von Oberflächenwirkungen auf eine Probe (1), die in wässerigem Milieu unter Druck Reibung ausgesetzt ist, wobei dieses Gerät einen Rahmen (B) umfasst, der ausgerüstet ist mit:
*) Haltemitteln der Probe (1) in einem dichten Behälter (4), der mit einem Fluid unter Druck, das auf Temperatur gebracht wurde, gefüllt ist,
*) Mitteln zur Anwendung von Reibungskräften zwischen der Probe (1) und einem Beanspruchungsorgan, die in dem Behälter (4) angeordnet sind, die erste motorisierte Mittel (10) für das Herstellen einer relativen Bewegung zwischen dem Beanspruchungsorgan und der Probe (1) und zweite Andruckmittel (14) des Beanspruchungsorgans in Abstützung auf die Probe (1) gemäß einer bestimmten Kraft umfasst,
*) elektrochemischen Messmitteln (3), die einen Detektionssensor der Änderung des elektrochemischen Potentials der Reibung ausgesetzten Probe (1) umfasst,
**dadurch gekennzeichnet, dass** das Beanspruchungsorgan als Drehstift (2) ausgebildet ist, der von den ersten Mitteln (10) rotierend angetrieben wird, und dass die Probe (1) von den zweiten Mitteln (14) getragen wird, die zwischen einer Beladestellung der Probe (I), in der die Probe (1) vom Drehstift (2) beabstandet platziert ist, und einer Andruckstellung, in der die Probe (1) in Abstützung gegen den Drehstift (2) gehalten wird, verschiebbar beweglich sind.

2. Gerät nach Anspruch 1, **dadurch gekennzeichnet, dass** die ersten Mittel ein Motororgan (10) umfassen, das außerhalb des Behälters angeordnet ist und das mit einer Antriebswelle (9) des Drehstifts (2) ausgestattet ist, die sich in den Behälter (4) verlängert.

3. Gerät nach Anspruch 2, **dadurch gekennzeichnet, dass** Abdichtmittel (19) zwischen der Antriebswelle (9) und einer entsprechenden Wand des Behälters (4), die sie durchquert, zwischengeseellt sind, wobei die Abdichtmittel (19) ein doppelt umhülltes Rohr für den Innendurchgang der Antriebswelle (9) umfassen.

4. Gerät nach einem der Ansprüche 2 und 3, **dadurch gekennzeichnet, dass** der Drehstift (2) anhand eines Werkzeugträgers (11), der mit der Antriebswelle (9) verbunden ist, lösbar auf den ersten Mitteln (10) montiert ist, wobei der Drehstift (2) anhand von leicht reversiblen Befestigungsmitteln (12) auf dem Werkzeugträger (11) befestigt ist und durch eine Vielzahl von Stiften eines Sets austauschbar ist, die aus einem jeweiligen speziellen Material bestehen,

5. Gerät nach einem der vorangehenden Ansprüche, **dadurch gekennzeichnet, dass** die zweiten Mittel ein Gestell (14) umfassen, das mit Mitteln zum unbeweglichen Halt der Probe (1) ausgestattet ist und das auf dem Rahmen (B) anhand von zwischen der Belade- und der Andruckstellung verschiebbaren Manövriermitteln (22) montiert ist.

6. Gerät nach Anspruch 5, **dadurch gekennzeichnet, dass** die Mittel zum unbeweglichen Halt der Probe (1) von einer Empfangsaufnahme (15) durch Einspannen der Probe (1) gebildet werden, die in einen Sockel (13) eingearbeitet ist, der auf den zweiten Mitteln (14) montiert ist.

7. Gerät nach einem der Ansprüche 5 und 6, **dadurch gekennzeichnet, dass** das Gestell (14) mit Kühlmitteln (21) ausgestattet ist.

8. Gerät nach einem der Ansprüche 5 bis 7, **dadurch gekennzeichnet, dass** die verschiebenden Manövriermittel (22) des Gestells (14) mit Kalibrierungsmitteln (23, 24) der Andruckkraft der Probe (1) gegen den Drehstift (2) ausgestattet sind.

9. Gerät nach einem der Ansprüche 5 bis 8, **dadurch gekennzeichnet, dass** die verschiebenden Manövriermittel (22) des Gestells (14) vom Typ Schnecke sind.

10. Gerät nach einem der vorangehenden Ansprüche, **dadurch gekennzeichnet, dass** der Drehstift (2) und die Probe (1) anhand elektrisch isolierender Mittel auf den ersten Mitteln (10) und auf den zweiten Mitteln (14) im Kontakt sind.
